# EUROPÄISCHE PATENTSCHRIFT

(11) **EP 0 443 371 B1**
(45) Veröffentlichungstag und Bekanntmachung des Hinweises auf die Patenterteilung: **21.09.1994**
(21) Anmeldenummer: 91101653.3
(22) Anmeldetag: 07.02.1991
(51) Int. Cl.: F02K 9/58, F02K 9/56

(54) **Verfahren zur Regelung von Triebwerken in Raumflugkörpern**
Method to control space thrusters
Méthode de régulation de poussée pour engins spatiaux

(30) Priorität: 22.02.1990 DE 4005607
(43) Veröffentlichungstag der Anmeldung: 28.08.1991
(73) Patentinhaber: Daimler-Benz Aerospace Aktiengesellschaft, 80995 München (DE)
(72) Erfinder: Ehrig, Dietrich, W-2801 Grasberg (DE); Steenborg, Manfred, W-2863 Ritterhude (DE)
(74) Vertreter: Hansmann, Dierk, Dipl.-Ing.

(56) Entgegenhaltungen:
- EP-A- 0 275 361
- WO-A-87/02098
- DE-A- 1 751 389
- DE-B- 1 301 932
- US-A- 2 794 318
- US-A- 2 986 883
- US-A- 2 995 008
- US-A- 3 724 213

## Beschreibung

Die Erfindung betrifft ein Verfahren zur Regelung von Triebwerken in Raumflugkörpern, bei denen aus wenigstens einem Treibstofftank ein flüssiger oder gasförmiger Treibstoff in eine Reaktionskammer gefördert wird und dort durch dessen chemische Reaktion und/oder Zersetzung Treibgase erzeugt werden und die mit kontinuierlich abnehmendem Tankdruck betrieben werden. Ferner betrifft sie eine Vorrichtung zur Durchführung eines solchen Verfahrens.

Bei Triebwerken von Raumflugkörpern, die im sogenannten Blow-down-Betrieb benutzt werden und die überwiegend in Dauerbetrieb laufen, tritt in der Regel eine Abnahme des vom Triebwerk erzeugten spezifischen Impulses und Schubes mit zunehmender Betriebsdauer auf. Die Ursache ist darin zu suchen, daß bei dieser Betriebsweise der Treibstofftank, bzw. im Fall eines Zweikomponenten-Treibstoffs die Treibstofftanks, vor dem Start mit Treibstoff befüllt werden und zum Betrieb des entsprechenden Triebwerks einmalig mit einem Druckgas beaufschlagt werden, durch das der Treibstoff in die Reaktionskammer gefördert wird. Infolge der Treibstoffentnahme sinkt der Druck im Treibstofftank und kehrt nicht wieder auf seinen Anfangswert zurück. Dies aber führt zu einer Abnahme des Treibstoffdurchsatzes im Triebwerk und damit verbunden zu einer Verringerung des Wirkungsgrades des Triebwerks. Dadurch wird für ein solches Triebwerk der eigentlich erreichbare optimale spezifische Impulswert nur für eine, verglichen mit der gesamten Brenndauer, kurze Zeitspanne eingehalten.

Dieser Effekt wirkt sich besonders nachteilig in solchen Fällen aus, in denen eine Reihe nominell gleichartiger Triebwerke beispielsweise zur Lageregelung benutzt werden sollen.

Zwar ist es bereits bekannt, zur Verminderung dieses nachteiligen Effektes sogenannte Flow-Limiter einzusetzen, d.h. Blenden, durch die die Schübe der einzelnen Triebwerke in einem möglichst engen Toleranzbereich gehalten werden und durch Fertigungstoleranzen bedingte Druck- bzw. Impulsdifferenzen ausgeglichen werden sollen. Die Ergebnisse dieser Maßnahme sind jedoch nicht zufriedenstellend, weil keine Treibstoffregelung erreicht wird, sondern nur Anpassung von Triebwerk zu Triebwerk.

Darüber hinaus ist es aus der DE-OS 31 28 735 bekannt, bei einem Triebwerk, das auf der Basis der katalytischen Zersetzung eines flüssigen Energieträgers bei erhöhten Temperaturen arbeitet, eine Regelung des erzeugten Schubes in der Weise vorzunehmen, daß die Zersetzungsreaktion und damit die Menge des pro Zeiteinheit erzeugten Treibgases durch eine Veränderung der Temperatur in der Zersetzungskammer gesteuert wird. Dies geschieht über eine elektronische Steuerschaltung, die einen über entsprechende Heizelemente fließenden elektrischen Strom regelt.

Weiterhin ist es aus der US 44 24 679 bei Hybrid-Triebwerken bekannt wenigstens eine Treibstoffkomponente über eine Vorrichtung mit einer Konstantöffnung mit dazu parallel liegendem Regelventil der Triebwerksbrennkammer zuzuführen. Das Regelventil wird in Abhängigkeit von einem den Druck hinter der Vorrichtung erfassenden Meßgeber geregelt, aber hinreichend konstante Schubimpulse lassen sich damit nicht erzeugen, weil die Druckverhältnisse in dem Treibstofftank unberücksichtigt bleiben.

Aufgabe der Erfindung ist es, für durch flüssige oder gasförmige Treibstoffe betriebene Raumfahrttriebwerke ein Regelverfahren anzugeben, das die Einhaltung einer weitgehend gleichbleibenden Schubgröße im Bereich des besten spezifischen Impulses des Triebwerkes über den gesamten Blow-Down-Bereich ermöglicht. Weiterhin soll durch die Erfindung eine Vorrichtung zur Durchführung eines solchen Verfahrens bereitgestellt werden.

Die Erfindung löst die erste Aufgabe durch ein Verfahren mit den kennzeichnenden Merkmalen des Patentanspruchs 1. Das erfindungsgemäße Verfahren bietet dabei einerseits die Möglichkeit, eine Anpassung des von verschiedenen Triebwerken erzeugten Schubes vorzunehmen, andererseits kann mit seiner Hilfe bei mehreren, zu einem Block zusammengefaßten Triebwerken auf einfache Weise ein gleichbleibender Schub erzeugt werden.

Zur Lösung der weiteren Aufgabe ist eine Vorrichtung mit den kennzeichnenden Merkmalen des Patentanspruchs 4 vorgesehen.

Durch das erfindungsgemäße Regelverfahren werden die Nachteile des eingangs beschriebenen Blow-Down-Betriebes, bei dem der Druck im Treibstofftank eines hydrazinbetriebenen Triebwerkes beispielsweise von 22 auf etwa 5,5 bar absinken und zu einer Abnahme der Durchflußmenge auf etwa 25 % der Anfangsmenge führen kann, vermieden, indem derjenige Durchsatz, der triebwerkspezifisch den optimalen Impulswert liefert, über den gesamten Druckbereich oder zumindest dessen größten Teil eingehalten wird. Die erfindungsgemäße Regelungsvorrichtung ist dabei aufgrund ihres integralen Regelungsverhaltens in der Lage, einen durch den vorgegebenen Durchsatz hervorgerufenen Druckverlust wieder auszugleichen. Zugleich kann bei einer Verwendung einer solchen Vorrichtung die eingangs erwähnte Ansteuerelektronik für die Aufheizeinrichtung der Reaktionskammer entweder ganz entfallen oder zumindest stark vereinfacht werden.

Im folgenden soll die Erfindung anhand von in der Zeichnung dargestellten Ausführungsbeispielen näher erläutert werden. Es zeigen:
- Fig. 1: ein Triebwerk für Raumfahrzeuge mit einer Regelungsvorrichtung gemäß der Erfindung,
- Fig. 2: eine vergrößerte Darstellung des in Fig. 1 gekennzeichneten Bereichs II,
- Fig. 3: eine zweite Ausführungsform der in Fig. 2 dargestellten Anordnung,
- Fig. 4: eine dritte Ausführungsform der in Fig. 3 dargestellten Anordnung,
- Fig. 5: eine vierte Ausführungsform der in Fig. 4 dargestellten Anordnung und
- Fig. 6: eine schematische Darstellung Darstellung einer Triebwerkskonfiguration bei einem Raumfahrzeug.

In den Figuren sind gleich Bauteile mit den gleichen Bezugszeichen versehen.

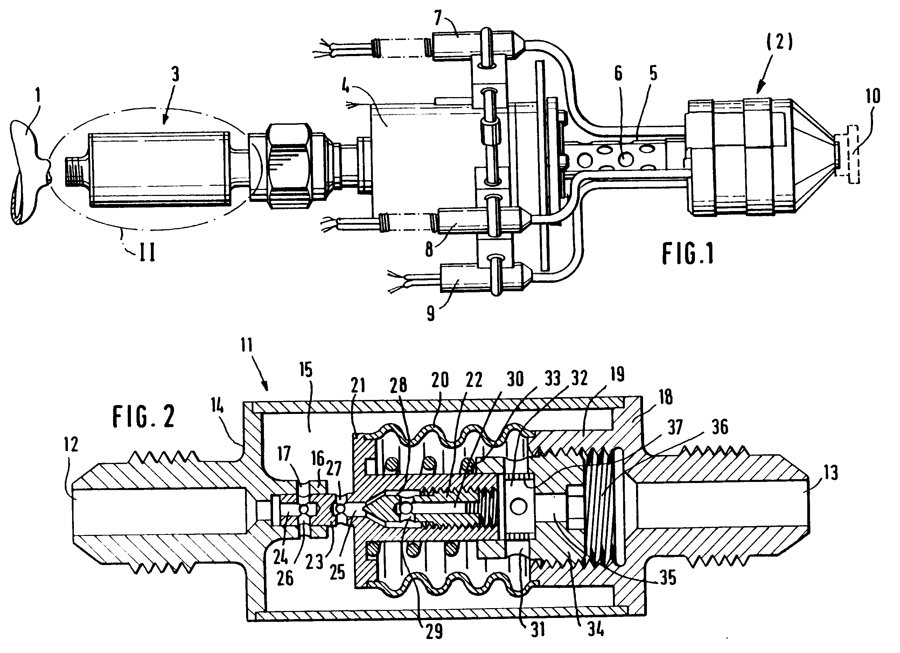

Bei dem in Fig. 1 dargestellten Raumfahrttriebwerk handelt es sich um ein Triebwerk, bei dem durch die katalytische Zersetzung eines in einem Tank 1 mitgeführten flüssigen Monopropellants, im vorliegenden Fall Hydrazin, in einer Reaktions- bzw. Zersetzungskammer 2 bei höheren Temperaturen die für die Schuberzeugung erforderlichen Treibgase erzeugt werden. Treibstofftank 1 und Reaktionskammer 2 sind dabei in der Zeichnung nur andeutungsweise dargestellt, wobei die Reaktionskammer 2 überdies unter einer Verkleidung verborgen ist. Zwischen diesen beiden Komponenten sind eine Regelungsvorrichtung 3, ein Ventil 4, ein unter einem Hitzeschild 5 verborgenes, in die Reaktionskammer 2 führendes Einspritzrohr 6 sowie Heizelemente 7 bis 9, die zur Aufheizung der Reaktionskammer 2 dienen vorgesehen. Die Austrittsdüse 10 für die erzeugten Treibgase befindet sich im rechten Teil der in Fig. 1 dargestellten Anordnung.

Angemerkt sei, daß die nachfolgend näher beschriebene Regelungsvorrichtung 3 in Fig. 1 zwar im Zusammenhang mit einem Triebwerk dargestellt ist, das mit einem flüssigen Monopropelant betrieben wird, es aber selbstverständlich in gleicher Weise möglich ist, diese Vorrichtung bzw. das mit dieser Vorrichtung realisierte Regelungsverfahren auch bei Triebwerken einzusetzen, die mit Zweikomponenten-Treibstoffen bzw. mit gasförmigen Treibstoffen betrieben werden.

Die in Fig. 2 dargestellte Regelungsvorrichtung 3 besteht aus einer zylindrischen Kammer 11, deren Einlaßöffnung 12 mit dem Treibstofftank 1 und deren Auslaßöffnung 13 mit dem Ventil 4 verbunden ist. Ein auf der Einlaßseite angeordneter Adapterflansch 14 weist einen in einen Eintrittsraum 15 ragenden rohrförmigen Ansatz 16 auf, der endseitig offen ausgebildet ist und der mit einer Querbohrung 17 versehen ist. Die Querbohrung 17 kann außerdem aus einem Schlitz bestehen, welcher auch nur einseitig vorhanden sein kann.

Ein die Kammer 11 auslaßseitig verschließender Adapterflansch 18 trägt auf einem ebenfalls zylindrischen, in die Kammer 11 ragenden Ansatz 19 einen metallischen Membranbalg 20, in dessen Inneren auf einer den Balg 20 verschließenden Endplatte 21 eine Drosselschraube 22 gehaltert ist. In Richtung auf den Eintrittsraum 15 hin weist die Endplatte 21 einen zylindrischen Ansatz 23 auf, dessen Durchmesser so gewählt ist, daß er in die axiale Bohrung des Ansatzes 16 des Adapterflansches 14 paßt.

Der Ansatz 23 ist, wie aus Fig. 2 ersichtlich, als Dosiernadel ausgebildet, indem er mit zwei axialen Bohrungen 24 und 25 versehen ist, die untereinander nicht verbunden sind und von denen die erstere mit der Einlaßöffnung 12 und über eine Querbohrung 26 mit der Querbohrung 17 des Adapterflansches 14 in Verbindung steht. Eine weitere Querbohrung 27 verbindet den Eintrittsraum 15 mit der axialen Bohrung 25, die sich in der Umgebung der Drosselschraube 22 zu einem Ringraum 28 erweitert. Die Form dieses Ringraumes 28 ist dabei der äußeren Form der Drosselschraube 22 so angepaßt, daß sich optimale Strömungsbedingungen ergeben.

Über eine in die Drosselschraube 22 eingebrachte Querbohrung 29 sowie eine axiale Bohrung 30 ist der Ringraum 28 schließlich mit der Auslaßöffnung 13 verbunden. Die Drosselschraube 22 ist dabei in der Endplatte 21 in axialer Richtung verstellbar gehaltert, wobei eine Verstellung von der Auslaßöffnung 13 her erfolgen kann.

Der Innenraum des Balges 20 steht über Bohrungen 31 mit dem Austrittsbereich 32 der Drosselschraube 22 in Verbindung. Im Inneren des Balges 20 ist überdies eine Druckfeder 33 angeordnet, die sich einerseits an der Endplatte 21 und andererseits an einer Justierschraube 34 abstützt, mit deren Hilfe die Federspannung veränderbar ist. Die Justierschraube 34 ist mit einer Durchgangsbohrung 35 versehen, die den Austrittsbereich 32 der Drosselschraube 22 mit einem Auslaßraum 36 verbindet.

Die Wirkungsweise der vorstehend beschriebenen Anordnung ist wie folgt:
Bei zunächst geschlossenem Ventil 4 nimmt der Balg 20 die in Fig. 2 dargestellte Position ein, und es herrscht im Eintrittsraum 15, im Auslaßraum 36 sowie im Inneren des Balges 20 der gleich Druck. Nach dem Öffnen des Ventils 4, das auch als Flow Control Valve bezeichnet wird, verringert sich im Auslaßraum 36 sowie im Inneren des Balges 20 der Druck und bewirkt auf diese Weise eine Kontraktion des Balges 20. Dies wiederum führt zu einer Verschiebung der Dosiernadel 23 gegenüber dem Ansatz 16, was zur Folge hat, daß die Bohrungen 17 und 26 nicht mehr deckungsgleich sind, so daß der durchströmbare Querschnitt verringert wird, wodurch ein zusätzlicher Druckabfall zwischen dem Eintrittsraum 15 und dem Auslaßraum 36 entsteht. Der Weg des Balges 20 ist dabei durch einen Anschlag 37 begrenzt.

Insgesamt ergibt sich an der Drosselschraube 22 ein charakteristischer Druckverlust, der von der eingestellten Durchsatzmenge abhängt. Ein typischer Wert bei einem eingestellten Durchsatz von 110 mg pro Sekunde liegt bei etwa 2 bar. Ein weiterer Druckverlust tritt im Einspritzrohr des Ventils auf, dieser liegt typischerweise bei etwa 1,5 bar. Geht man von einer Anfangssituation aus, bei der die Druckdifferenz zwischen dem Treibstofftank 1 und der Reaktionskammer 2 beispielsweise 20 bar beträgt, so wird sich aufgrund der wirkenden hydraulischen Kräfte der Balg 20 so weit kontrahieren, bis die durchströmbare Querschnittsfläche zwischen der Dosiernadel und der Querbohrung 17 am Ansatz 16 des Einlaß-Adapterflansches 14 sich auf einen Wert eingestellt hat, bei dem an dieser Stelle ein Druckverlust von etwa 16,5 bar (= 20 - 2 - 1,5 bar) ergibt, d.h. der Balg 20 wird nur einen sehr geringen durchströmbaren Querschnitt freigeben. Nimmt mit zunehmender Betriebsdauer des Triebwerks der Druck im Treibstofftank 1 ab, so entspannt sich die Druckfeder 33 und mit ihr der Balg 20 immer mehr, bis schließlich bei einer Druckdifferenz von nur noch 3,5 bar die volle Querschnittsfläche zur Verfügung steht. Geht man davon aus, daß in der Reaktionskammer ein Druck von etwa 2 bar herrscht, so ist dies bei einem Druck von etwa 5,5 bar im Treibstofftank 1 der Fall.

Insgesamt ermöglicht die vorstehend beschriebene Anordnung somit die Aufrechterhaltung einer konstanten Durchflußmenge, in diesem Fall etwa 100 mg/sec, über einen Druckbereich zwischen 22 und 5,5 bar im Treibstofftank 1. Wird der untere Grenzwert von in diesem Fall 5,5 bar unterschritten, so ist der bei diesem Beispiel als optimal angesehene Durchsatz nicht mehr erreichbar und der Durchsatz nimmt, wie im Blow-down-Betrieb, einen kontinuierlich geringer werdenden Wert an.

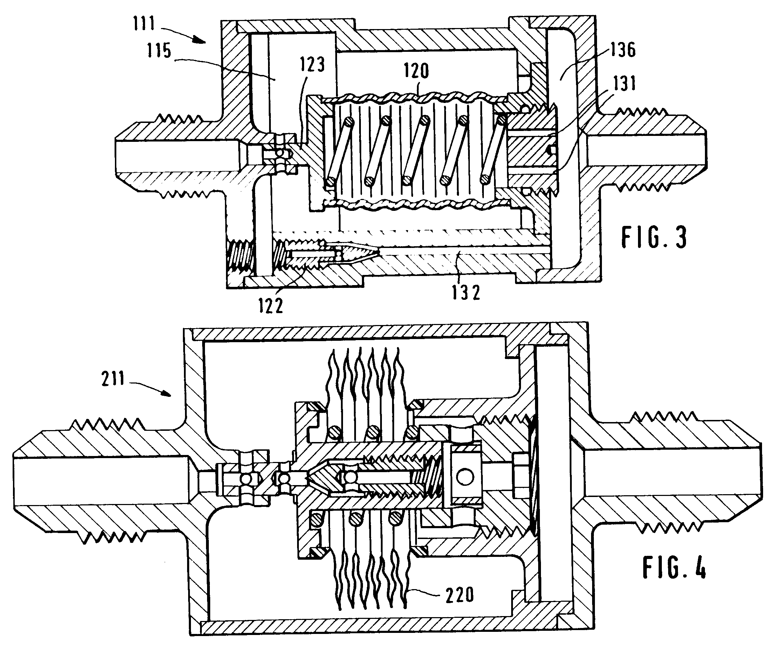

Die in den Figuren 3 bis 5 dargestellten Regelungsvorrichtungen sind im Prinzip ähnlich aufgebaut wie die vorangehend beschriebene, ihre Funktionsweise entspricht ebenfalls dem bereits geschilderten Funktionsablauf.

So unterscheidet sich die in Fig. 3 dargestellte Anordnung von der gemäß Fig. 2 im wesentlichen darin, daß in diesem Fall die Drosselschraube 122 nicht im Inneren des Balges 120, sondern in der Seitenwand des zylindrischen Kammergehäuses 111 angeordnet ist und daß der über die Dosiernadel 123 in den Eintrittsraum 115 gelangende Treibstoff über einen in der Gehäusewand verlaufenden Kanal 132 in den Auslaßraum 136 gefördert wird. Dieser steht über Bohrungen 131 mit dem Innenraum des Balges 120 in Verbindung. Der wesentliche Unterschied zwischen der Anordnung gemäß Fig. 4 und derjenigen in Fig. 2 besteht darin, daß der Wellenbalg 20 durch einen Membranbalg 220 ersetzt wurde. Diese Maßnahme bewirkt, daß die Regelvorrichtung 3 besonders rasch auf Druckverinderungen im Gesamtsystem zu reagieren vermag, so daß eine noch exaktere Einhaltung des vorgegebenen Durchsatzes möglich ist. Bedingt durch die unterschiedliche Bauform des bei diesem Ausführungsbeispiel verwendeten Membranbalges 220 ergibt sich hier zugleich eine kompaktere Bauweise des Kammergehäuses 211, das kürzer als das Gehäuse der Kammer 11 in Fig. 2 ist, zugleich aber einen größeren Durchmesser aufweist.

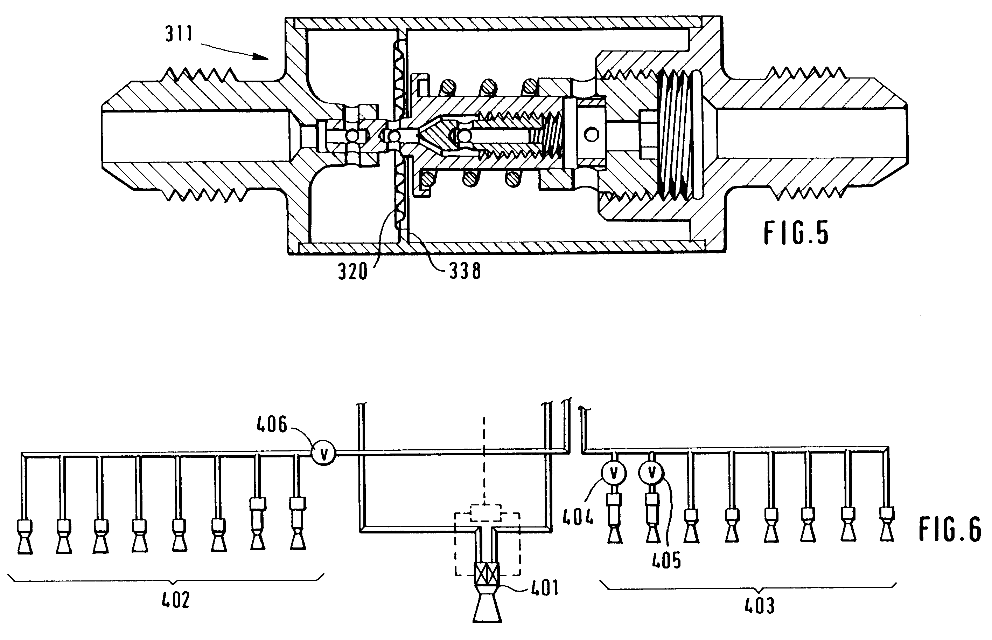

Bei der in Fig. 5 dargestellten Anordnung schließlich ist der Membranbalg 20 gemäß Fig. 2 durch eine Rillenmembranscheibe 320 ersetzt worden, die an einem ringförmigen inneren Ansatz 338 des Kammergehäuses 311 gehaltert ist. Der Vorteil dieser Anordnung ist darin zu sehen, daß aufgrund der geringeren Masse der Membranscheibe 320 im Vergleich zum einem Membran- oder Faltenbalg sich nicht nur insgesamt eine Gewichtseinsparung ergibt, sondern daß diese Anordnung zugleich ein besonders sensibles Regelverhalten aufweist.

Bei der Darstellung in Fig. 6 sind schematisch in einem Bild zwei verschiedene Einsatzmöglichkeiten für eine der vorstehend beschriebenen Regelvorrichtung dargestellt. Die Figur zeigt neben einem Haupttriebwerk 401 jeweils einen Block von Triebwerken 402 bzw. 403, die der Lageregelung eines Raumflugkörpers dienen. Während im rechten Teil der Figur ein Fall dargestellt ist, bei dem, entsprechend dem vorstehend geschilderten, jeweils eine Reglungsvorrichtung 404,405 einem einzelnen Triebwerk zugeordnet ist, regelt im linken Teil der Figur eine Regelungsvorrichtung 406 die Durchflußmenge in einer Treibstoffleitung, die gleichzeitig sämtliche zu diesem Block gehörigen Triebwerke 402 versorgt.

Abschließend sei angemerkt, daß sich die vorstehend beschriebenen Ausführungsbeispiele zwar ausschließlich auf die Verwendung eines Einkomponenten-Treibstoffes beziehen, daß aber, wie bereits erwähnt, die Anwendung des beschriebenen Regelungsverfahrens auch auf Zweikomponenten-Treibstoffe möglich ist, indem zwei Regelungsvorrichtungen vorgesehen werden, die den Durchsatz in jedem der beiden Zuführsysteme für die Treibstoffkomponenten für sich genommen konstant halten.

## Patentansprüche

1. Verfahren zur Regelung von Triebwerken in Raumflugkörpern, bei denen aus wenigstens einem Treibstofftank ein flüssiger oder gasförmiger Treibstoff in eine Reaktionskammer gefördert wird und dort durch dessen chemische Reaktion und/oder Zersetzung Treibgase erzeugt werden und die mit kontinuierlich abnehmendem Tankdruck betrieben werden, dadurch gekennzeichnet, daß die Druckdifferenz zwischen dem Druck im Treibstofftank (1) einerseits und dem Druck in der Reaktionskammer (2) andererseits erfaßt und als Stellsignal zur Regelung des Treibstoffdurchflusses verwendet wird.

2. Verfahren zur Regelung von mit Zweikomponenten-Treibstoffen betreibbaren Triebwerken, dadurch gekennzeichnet, daß die Durchflußregelung für jede Treibstoffkomponente getrennt in Abhängigkeit der als Stellsignal erfaßten Druckdifferenzen zwischen dem jeweiligen Treibstofftank und der Reaktionskammer erfoglt.

3. Verfahren nach Anspruch 1 oder 2, dadurch gekennzeichnet, daß die Regelung des Treibstoffdurchflusses nur bis zum Erreichen einer willkürlich wählbaren Druckschranke im Treibstofftank (1) durchgeführt wird.

4. Vorrichtung zur Durchführung des Verfahrens nach einem der Ansprüche 1 bis 3, dadurch gekennzeichnet, daß zwischen einem Treibstofftank (1) und einer Raktionskammer (2) ein Treibstoffregelorgan (3) angeordnet ist, das auf eine Veränderung der Druckdifferenz zwischen dem Treibstofftank (1) und der Reaktionskammer (2) anspricht.

5. Vorrichtung nach Anspruch 4, dadurch gekennzeichnet, daß das Regelorgan (3) als vom Treibstoff beaufschlagbarer selbsttätiger Regler ausgebildet ist.

6. Vorrichtung nach Anspruch 5, dadurch gekennzeichnet, daß zur Einstellung der Durchflußmenge eine verstellbare Drosselschraube (22,122) sowie eine von einem Membranelement (20,120,220,320) beaufschlagbare Dosiernadel (23,123) vorgesehen sind.

7. Vorrichtung nach Anspruch 6, dadurch gekennzeichnet, daß das Membranelement als federbelasteter Balg (20,120,220) ausgebildet ist.

8. Vorrichtung nach einem der Ansprüche 4 bis 7 zur Regelung eines mit einem Zweikomponenten-Treibstoff betriebenen Triebwerks, dadurch gekennzeichnet, daß im Zuführsystem für jede der Treibstoffkomponenten ein Regelorgan (3) vorgesehen ist.

9. Vorrichtung nach einem der Ansprüche 4 bis 8 zur Regelung einer aus mehreren Triebwerken bestehenden Anordnung, bei der die Triebwerke über eine gemeinsame Treibstoffleitung beaufschlagbar sind, dadurch gekennzeichnet, daß in der gemeinsamen Treibstoffleitung ein Regelorgan (406) vorgesehen ist.

10. Vorrichtung nach einem der Ansprüche 4 bis 7, dadurch gekennzeichnet, daß das Regelorgan (3) im Zuführsystem des Treibstoffes liegt und daß für das Triebwerk ein Resistojet mit Aufheizung der Abgase eingesetzt ist.

11. Vorrichtung nach einem der Ansprüche 4 bis 7, dadurch gekennzeichnet, daß das Regelorgan (3) im Zuführsystem des Treibstoffes liegt und daß für das Triebwerk ein Arcjet mit durch den Lichtbogen aufgeheizte Abgase eingesetzt ist.

12. Vorrichtung nach einem der Ansprüche 4 bis 7, dadurch gekennzeichnet, daß das Regelorgan im Zuführsystem des Treibstoffes liegt und daß für das Triebwerk ein Resistojet mit anpaßbarer Leistung in Abhängigkeit der im Raumflugkörper zur Verfügung stehenden Leistungskapazität eingesetzt ist.

13. Vorrichtung nach einem der Ansprüche 4 bis 7 und 11, dadurch gekennzeichnet, daß das Regelorgan (3) im Zuführsystem des Treibstoffes liegt und daß für das Triebwerk ein Arcjet mit anpaßbarer Leistung in Abhängigkeit des im Raumflugkörper zur Verfügung stehenden Leistungskapazität eingesetzt ist.

14. Vorrichtung nach einem der Ansprüche 4 bis 7 sowie 10 und 12, dadurch gekennzeichnet, daß das Regelorgan (3) im Zuführsystem des Treibstoffes liegt und daß für das Triebwerk ein Resistojet mit Regelelektronik zum Aktivieren und Überwachen eingesetzt ist.

15. Vorrichtung nach einem der Ansprüche 4 bis 7 sowie 7, 11 und 13, dadurch gekennzeichnet, daß das Regelorgan (3) im Zuführsystem des Treibstoffes liegt und daß für das Triebwerk ein Arcjet mit Regelelektronik zum Aktivieren und Überwachen eingesetzt ist.

## Claims

1. Method for controlling thrusters in space missiles, in which a liquid or gaseous fuel is fed out of at least one fuel tank of the thrusters into a reaction chamber and propellants are generated there by chemical reaction and/or decomposition of said liquid or gaseous fuel and the thrusters are operated with continuously falling tank pressure, **characterised in that** the pressure difference between the pressure in the fuel tank (1) on the one hand and the pressure in the reaction chamber (2) on the other hand is recorded and used as an actuating signal for controlling the flow of fuel.

2. Method for controlling thrusters operated with two-component fuels, **characterized in that** the flow control for each fuel component takes place individually as a function of the pressure difference between the respective fuel tank and the reaction chamber which is recorded as an actuating signal.

3. Method according to claim 1 or 2, **characterised in that** the control of the flow of fuel is carried out only until an arbitrarily selected pressure limit is reached in the fuel tank (1).

4. Apparatus for carrying out the method according to any one of claims 1 to 3, **characterised in that** between a fuel tank (1) and a reaction chamber (2) a fuel control device (3) is disposed, which responds to a change in the pressure difference between the fuel tank (1) and the reaction chamber (2).

5. Apparatus according to claim 4, **characterized in that** the control device (3) is constructed as an automatic controller actuated by the fuel.

6. Apparatus according to claim 5, **characterised in that** for the setting of the flow rate an adjustable restrictor screw (22, 122) and a metering needle (23, 123) actuated by a diaphragm element (20, 120, 220, 320) are provided.

7. Apparatus according to claim 6, **characterised in that** the diaphragm element is constructed as a spring-loaded bellows (20, 120, 220).

8. Apparatus according to any one of claims 4 to 7 for controlling a thruster operated with a two-component fuel, **characterised in that** a control device (3) is provided in the feed system for each of the fuel components.

9. Apparatus according to any one of claims 4 to 8 for controlling an arrangement consisting of a plurality of thrusters, in which the thrusters are actuated via a common fuel line, **characterised in that** a control device (406) is provided in the common fuel line.

10. Apparatus according to any one of claims 4 to 7, **characterised in that** the control device (3) lies in the fuel feed system and that a resisto-jet with heating of the exhaust gases is used for the thruster.

11. Apparatus according to any one of claims 4 to 7, **characterised in that** the control device (3) lies in the fuel feed system and that an arc-jet with exhaust gases heated by the arc is used for the thruster.

12. Apparatus according to any one of claims 4 to 7, **characterised in that** the control device (3) lies in the fuel feed system and that a resisto-jet with power adjustable as a function of the power capacity available in the space missile is used for the thruster.

13. Apparatus according to any one of claims 4 to 7 and 11, **characterised in that** the control device (3) lies in the fuel feed system and that an arc-jet with power adjustable as a function of the power capacity available in the space missile is used for the thruster.

14. Apparatus according to any one of claims 4 to 7 and 10 and 12, **characterised in that** the control device (3) lies in the fuel feed system and that a resisto-jet with control electronics for activation and monitoring is used for the thruster.

15. Apparatus according to any one of claims 4 to 7 and 7, 11 and 13, **characterised in that** the control device (3) lies in the fuel feed system and that an arc-jet with control electronics for activation and monitoring is used for the thruster.

## Revendications

1. Procédé de régulation de propulseurs de véhicules spatiaux dans lesquels au moins un réservoir fournit un combustible liquide ou gazeux à une chambre de réaction dans laquelle le combustible se transforme par réaction chimique et/ou décomposition en gaz assurant la propulsion, les propulseurs étant alimentés par le réservoir à une pression constamment décroissante, caractérisé en ce que la différence entre la pression dans le réservoir d'alimentation (1) et la pression à l'intérieur de la chambre de réaction (2) est saisie et utilisée comme signal pour réguler le débit de combustible.

2. Procédé de régulation de propulseurs utilisant des combustibles à deux composants, caractérisé en ce que la régulation du débit de chaque composant est assurée séparément en fonction de la différence des pressions existant dans le réservoir du composant correspondant et dans la chambre de réaction, utilisée comme signal de régulation..

3. Procédé selon la revendication 1 ou 2, caractérisé en ce que la régulation du débit de combustible n'a lieu que jusqu'à ce que soit atteinte, dans le réservoir (1), une valeur limite de la pression, choisie arbitrairement.

4. Dispositif pour la mise en oeuvre du procédé selon l'une des revendications 1 à 3, caractérisé en ce qu'un organe de régulation du combustible (3) est monté entre le réservoir (1) de combustible et une chambre de réaction (3), cet organe répondant aux variations de la différence de pression entre le réservoir (1) et la chambre (2).

5. Dispositif selon la revendication 4, caractérisé en ce que l'organe de régulation (3), est un régulateur automatique actionné directement par le combustible.

6. Dispositif selon la revendication 5, caractérisé en ce qu'une vis d'étranglement réglable (22, 122) ainsi qu'une aiguille de dosage (23, 123) actionnée par un élément à membrane (20, 120, 220, 320) sont utilisées pour régler le débit de combustible.

7. Dispositif selon la revendication 6, caractérisé en ce que l'élément à membrane est constitué par un soufflet élastique (20, 120, 220).

8. Dispositif selon l'une des revendications 4 à 7, utilisé pour réguler un propulseur alimenté en combustible à deux composants, caractérisé en ce qu'un organe de régulation (3), est prévu dans le système d'alimentation, pour chacun des composants.des carburants.

9. Dispositif selon l'une des revendications 4 à 8 utilisé pour réguler un ensemble de plusieurs propulseurs alimentés en combustible par une conduite commune, caractérisé en ce que cette conduite est équipée d'un organe de régulation (406).

10. Dispositif selon l'une des revendications 4 à 7, caractérisé en ce que l'organe de régulation (3) est monté dans le système d'amenée du combustible et que le propulseur est une tuyère à résistance avec réchauffage des gaz sortant .

11. Dispositif selon l'une des revendications 1 à 7, caractérisé en ce que l'organe de régulation (3) est monté dans le système d'amenée du combustible et que le propulseur est une tuyère à arc avec réchauffage des gaz de sortie par les arcs électriques.

12. Dispositif selon l'une des revendications 4 à 7, caractérisé en ce que l'organe de régulation (3) est monté dans le système d'amenée du combustible et que le propulseur est un propulseur électrothermique dont la puissance est réglable en fonction de la capacité de puissance disponible dans le véhicule spatial.

13. Dispositif selon d'une quelconque des revendications 4 à 7 et 11, caractérisé en ce que l'organe de régulation (3) est monté dans le système d'amenée du combustible et que le propulseur est un propulseur à arc dont la puissance est réglable en fonction de la capacité de puissance disponible dans le véhicule spaciale.

14. Dispositif selon l'une des revendications 4 à 7, et 10, et 12, caractérisé en ce que l'organe de régulation (3) est monté dans le système d'amenée du combustible et que le propulseur est une tuyère à résistance équipée d'une électronique de régulation, assurant commande et surveillance.

15. Dispositif selon l'une des revendications 4 à 7 ainsi que 7, 11 et 13, caractérisé en ce que l'organe de régulation (3) est monté dans le système d'amenée du combustible et que le propulseur est une tuyère à arcs équipée d'une électronique de régulation, assurant commande et surveillance.
